# EUROPÄISCHE PATENTANMELDUNG

(11) **EP 1 376 490 A1**
(43) Veröffentlichungstag der Anmeldung: **02.01.2004**
(21) Anmeldenummer: 03014036.2
(22) Anmeldetag: 23.06.2003
(51) Int. Cl.: G07F 7/00

(54) **Verfahren und System zur Bereitstellung einer Versorgungsleistung**

(30) Priorität: 22.06.2002 DE 10228016
(71) Anmelder: Bauer, Franz Hans Peter, 87719 Mindelheim (DE)
(72) Erfinder: Bauer, Franz Hans Peter, 87719 Mindelheim (DE)
(74) Vertreter: Fiener, Josef

(57) **Zusammenfassung**

Die vorliegende Erfindung betrifft ein Verfahren zur Bereitstellung einer Versorgungsleistung, bestehend aus:
a) Herausgabe (10) eines Mittels (2) als Nachweis, dass eine bestimmte Menge an Versorgungsleistung erworben wurde, wobei mit Hilfe des Mittels (2) eine Rückmeldung (13) an den Herausgeber (1) des Mittels und/oder einen Versorger, der die Versorgungsleistungen bereitstellt, erfolgt;
b) Freischalten (11, 14) der Versorgungsleistung, wenn die Rückmeldung erfolgt ist; und
c) Abschalten der Versorgungsleistung, wenn die bestimmte Menge verbraucht ist.

Weiterhin betrifft die Erfindung ein System zur Bereitstellung einer Versorgungsleistung, mit dem die Versorgungsleistung nur dann und in einer Menge bereitgestellt wird, wenn diese vor ihrer Entnahme bezahlt oder kreditiert worden ist, wobei insbesondere eine Karte als Nachweis-Mittel (2) verwendet wird, auf der eine Geheimzahl freirubbelbar ist.

## Beschreibung

Die vorliegende Erfindung betrifft ein Verfahren zur Bereitstellung einer Versorgungsleistung, das sicherstellt, dass die Versorgungsleistung nur dann abgegeben wird, wenn für diese bezahlt oder kreditiert worden ist. Weiterhin betrifft die Erfindung ein System zur Bereitstellung einer Versorgungsleistung, mit dem die Versorgungsleistung nur dann und in einer Menge bereitgestellt wird, in der diese vor der Entnahme bzw. dem Verbrauch bezahlt oder kreditiert worden ist.

Nach dem z. Z. üblichen System werden Versorgungsleistungen, insbesondere Strom, Wasser, Gas und Wärme oder ähnliche Medien, von dem Unternehmen, das die Versorgungsleistung bereitstellt, nachstehend als Versorger bezeichnet, bereitgestellt und an den Verbraucher, der nachstehend als Entnehmer bezeichnet wird, abgegeben. Der Entnehmer entnimmt die von ihm benötigte Menge an Versorgungsleistung und erhält von dem Versorger in gewissen Zeitabständen Rechnungen, deren Höhe von der Menge verbrauchter Versorgungsleistung abhängt. Die Menge der verbrauchten Versorgungsleistung wird in der Regel durch einen Zähler ermittelt, der an der Entnahmestelle vorhanden ist und in regelmäßigen Zeitabständen abgelesen werden muss. Ein Nachteil für den Versorger ist jedoch, dass Entnehmer für die von ihnen entnommenen Versorgungsleistungen nicht oder zu spät bezahlen. In diesen Fällen kann der Versorger zwar in der Regel die Abgabe der Versorgungsleistung einstellen, obwohl dies gesetzlich beschränkt sein kann, da die Versorgung mit Strom, Wasser, Gas oder Wärme lebensnotwendig sein kann. Dieses Abstellen der Versorgungsleistung erfolgt jedoch in der Regel erst nach einem gewissen Zeitraum, in dem der Entnehmer weiterhin Versorgungsleistung entnimmt, ohne dafür zu bezahlen.

Auf Campingplätzen und öffentlichen Anlagen wurden, um diesem Problem vorzubeugen, Anlagen entwickelt, an denen der Entnehmer vor der Entnahme der Versorgungsleistung bezahlt und in der Regel eine Münze oder Chipkarte erhält, die dann in ein entsprechendes Dosierungsgerät eingeworfen bzw. eingesteckt wird, wodurch die bezahlte Menge an Versorgungsleistung bereitgestellt wird. Dieses Pre-paid-System ist jedoch für die regelmäßige Abgabe an Haushalte nur wenig geeignet, da es für derartige Zwecke zu umständlich ist. Zum einen müssen die verbrauchten Münzen und Karten in der Regel vom Betreiber der Anlage wieder eingesammelt werden, um diese erneut zu verwenden und zum anderen ist es für den Entnehmer relativ umständlich und zeitaufwendig, sich für den täglichen Bedarf die entsprechenden Münzen oder Karten beim Versorger zu besorgen. Ferner sind derartige Anlagen in aller Regel relativ anfällig und reparaturaufwendig, was zur Folge hat, dass die Geräte ausfallen können und der Entnehmer keine Versorgungsleistung bereitgestellt bekommen würde.

Infolgedessen liegt ein Bedürfnis vor, ein Verfahren und ein System zur Verfügung zu stellen, mit dem eine Versorgungsleistung bereitgestellt werden kann, jedoch unter der Voraussetzung, dass der Entnehmer zuvor bezahlt hat (oder aufgrund seiner bisherigen Zahlungen einen gewissen Kreditrahmen erhält) und mit dem die oben beschriebenen Nachteile bekannter Anlagen vermieden werden.

Diese Aufgabe wird gelöst durch ein Verfahren nach Anspruch 1 und ein System nach Anspruch 10. Vorteilhafte Ausgestaltungen sind Gegenstand der Unteransprüche.

Das erfindungsgemäße Verfahren zur Bereitstellung einer Versorgungsleistung weist die folgenden Schritte auf:
a) Herausgabe eines Mittels als Nachweis, dass eine bestimmte Menge an Versorgungsleistung erworben wurde, wobei mit Hilfe des Mittels eine Rückmeldung an den Herausgeber des Mittels und/oder einen Versorger, der die Versorgungsleistung bereitstellt, erfolgt;
b) Freischalten der Versorgungsleistung, wenn die Rückmeldung erfolgt ist; und
c) Abschalten der Versorgungsleistung, wenn die bestimmte Menge verbraucht ist.

Mit dem erfindungsgemäßen Verfahren wird sichergestellt, dass nur die Menge an Versorgungsleistung entnommen werden kann, für die der Entnehmer zuvor bezahlt hat oder noch kreditiert wurde. Gleichzeitig wird das bekannte Verfahren vereinfacht, indem eine Rückmeldung an den Herausgeber und/oder Versorger erfolgt, wodurch diesem bekannt gemacht wird, dass und welche Menge bezahlt worden ist. Ferner entfällt für den Versorger und/oder Herausgeber die Notwendigkeit, verbrauchte Münzen oder Karten wieder einzusammeln. Mit dem erfindungsgemäßen Verfahren wird es somit möglich, die Abgabe der Versorgungsleistung exakt zu kontrollieren.

Weiterhin ist erfindungsgemäß ein System zur Bereitstellung einer Versorgungsleistung vorgesehen. Mit diesem System wird die Versorgungsleistung nur dann und in einer Menge bereitgestellt, wenn diese vor ihrer Entnahme bezahlt worden ist. Das System weist folgende Elemente bzw. Beteiligte auf:
a) einen Versorger, der die Versorgungsleistung bereitstellt;
b) ein Mittel als Nachweis, dass eine bestimmte Menge an Versorgungsleistung erworben oder kreditiert wurde; und
c) eine Entnahmestelle, an der die Versorgungsleistung entnehmbar ist.

Mit Hilfe des Mittels erfolgt eine Rückmeldung an einen Herausgeber des Mittels und/oder den Versorger und aufgrund der Rückmeldung wird die bestimmte Menge an Versorgungsleistung bereitgestellt. Mit dem erfindungsgemäßen System wird folglich Versorgungsleistung nur dann und nur in der Menge abgegeben, für die vor der Entnahme bezahlt worden ist. Ferner wird durch die Rückmeldung mit Hilfe des Mittels diese kontrollierte Abgabe und Versorgungsleistung im Vergleich zum Stand der Technik wesentlich vereinfacht.

Gemäß einem bevorzugten Ausführungsbeispiel der Erfindung ist als Mittel eine Karte vorgesehen, auf der ein Speicherchip, auf dem Daten gespeichert sind, und/oder zumindest ein Identifikationsmerkmal, beispielsweise eine insbesondere mehrstellige Nummer, vorhanden sind. Der Entnehmer kauft eine derartige Karte, wodurch die von ihm gewünschte Menge an Versorgungsleistung abgegolten ist. Mit Hilfe der Karte führt er nun eine Rückmeldung an den Herausgeber des Mittels und/oder den Versorger durch. Dies kann dadurch erfolgen, dass die Karte mit dem Speicherchip in ein entsprechendes Lesegerät, vorzugsweise an der Entnahmestelle, eingeführt wird, wo die Daten gelesen werden und die Rückmeldung automatisch erfolgt, beispielsweise direkt über die Stromleitung und/oder über Funk.

Ein weiteres Ausführungsbeispiel sieht vor, dass der Entnehmer das Identifikationsmerkmal, insbesondere die auf der Karte vorgesehene, vorzugsweise freigerubbelte Nummer an den Versorger und/oder Herausgeber des Mittels zurückmeldet. Die Rückmeldung kann insbesondere mündlich oder schriftlich erfolgen, beispielsweise über Telefon, E-mail, SMS oder auch mit gringer Verzögerung per Brief oder Postkarte. An dem Ort der Rückmeldung kann ein Rechner vorgesehen sein, mit dem die zu entnehmende Menge an Versorgungsleistung freigegeben wird und dann die Abgabe der Versorgungsleistung abschaltet, wenn das käuflich erworbene Kontingent aufgebraucht ist. Die Abschaltung kann mit den gleichen Steuerungen erfolgen, beispielsweise durch Anfunken des Elektrizitätszählers an der Entnahmestelle.

Weiterhin ist erfindungsgemäß vorgesehen, dass das Mittel sowohl vom Versorger selbst als auch von einem Dritten, einem sogenannten Herausgeber herausgegeben wird. Ferner ist vorgesehen, dass das Mittel über Dritte vertreibbar ist. Derartige Dritte können beispielsweise Tankstellen, Postfilialen, Banken, Lebensmittelgeschäfte, Einzelhändler, Tabakläden und Kioske sein. Dadurch ist das Mittel einfach, schnell und überall erhältlich, so dass es für den Entnehmer keine Mühe bereitet und er sich nicht zum Herausgeber bzw. Versorger begeben muss, um die von ihm benötigte Menge an Versorgungsleistung zu erwerben. Ferner erweist es sich auch als vorteilhaft für die Versorger, da diese in der Regel lokal angesiedelt sind, zum Beispiel für die Stadtwerke, die nunmehr eine gemeinsame Vertriebsstruktur, z.B. die der Postfilialen nutzen können. Durch den Vertrieb über Dritte ist dieser Nachteil behoben, was sich insbesondere für den Entnehmer als äußerst vorteilhaft herausstellt. Durch das Vorsehen eines separaten Herausgebers, der die Karten herausgibt, tritt eine zusätzliche Entlastung der Versorger auf, da diese keinerlei Infrastruktur für den Vertrieb, die Herausgabe der Mittel und deren Kontrolle bzw. Abrechnung aufbauen müssen, sondern lediglich die entsprechende Versorgungsleistung bereitstellen.

Nachstehend wird die Erfindung anhand der Zeichnungen näher erläutert und beschrieben:
- Fig. 1: eine schematische Darstellung eines Ausführungsbeispieles;
- Fig. 2: eine schematische Darstellung eines weiteren Ausführungsbeispieles;
- Fig. 3: eine schematische Darstellung noch eines weiteren Ausführungsbeispieles; und
- Fig. 4: eine schematische Darstellung noch eines weiteren Ausführungsbeispieles.

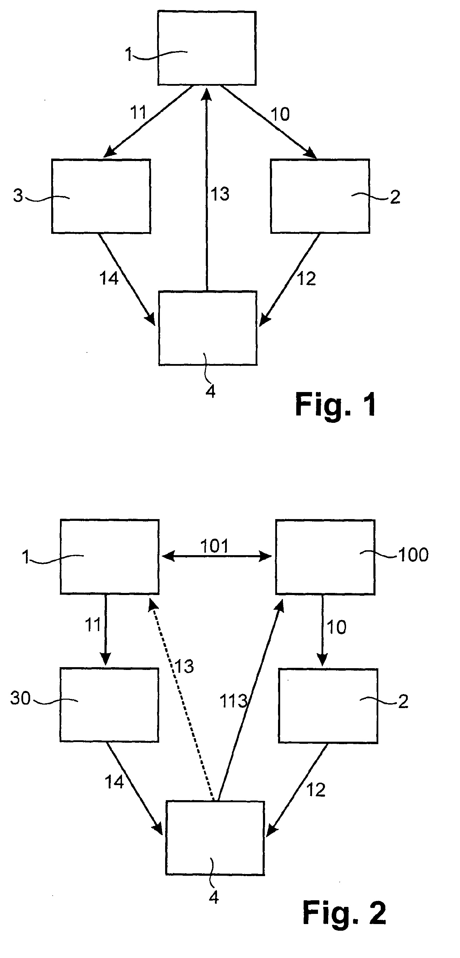

Wie aus Fig. 1 ersichtlich, ist ein Versorger 1 vorgesehen, der sowohl eine Karte 2 herausgibt, dargestellt durch den Pfeil 10, als auch eine Versorgungsleistung, im Ausführungsbeispiel der Fig. 1 z.B. Strom 3 bereitstellt, dargestellt durch den Pfeil 11. Ein Entnehmer 4 kauft eine Karte 2, dargestellt durch den Pfeil 12, wodurch eine bestimmte Menge an Strom 3 bezahlt ist. Nach dem Kauf der Karte 2 führt er eine Rückmeldung, dargestellt durch den Pfeil 13 an den Versorger 1 durch. Diese Rückmeldung kann beispielsweise dadurch erfolgen, dass er die auf der Karte 2 vorgesehenen Identifikationsmerkmale an den Versorger 1 zurückschickt. Auf der Karte 2 ist das Identifikationsmerkmal, insbesondere eine Buchstaben- oder Nummernfolge versteckt vorgesehen, so dass der Entnehmer 4 nach dem Kauf der Karte 2 dieses freilegen, insbesondere freirubbeln kann. Nach der erfolgten Rückmeldung 13 (z.B telefonische Durchsage einer zwanzigstelligen Nummer, die auf der Karte freigelegt wurde) schaltet der Versorger 1 die dem Kaufbetrag der Karte 2 entsprechende Menge an Strom 3 frei, die der Entnehmer 4 schließlich entnehmen kann, dargestellt durch den Pfeil 14.

Die Entnahme ist solange möglich, wie die von den Entnehmer 4 mit der Karte 2 erworbene Menge Strom 3 noch nicht verbraucht ist. Nach Verbrauch der vorbezahlten Menge an Strom 3 beendet der Versorger 1 die Bereitstellung des Stromes 3, wodurch dem Entnehmer 4 die Stromentnahme verwehrt ist, z.B. durch ein Rundsteuersignal der entsprechende Elektrizitätszähler des Kunden gesperrt wird.

Fig. 2 stellt schematisch ein weiteres Ausführungsbeispiel der Erfindung dar. Neben dem Versorger 1 und dem Entnehmer 4 ist ein Herausgeber 100 vorgesehen. Im Gegensatz zum Ausführungsbeispiel der Fig. 1 stellt der Versorger 1 lediglich eine Versorgungsleistung, im Ausführungsbeispiel der Fig. 2 Wasser 30, bereit, dargestellt durch den Pfeil 11. Der Herausgeber 100 gibt dagegen eine Karte 2 heraus, dargestellt durch den Pfeil 10. Folglich wird die Karte 2 nun nicht durch den Versorger 1 herausgegeben, wie im Ausführungsbeispiel der Fig. 1, sondern durch einen separaten Herausgeber 100. Dadurch entfällt für den Versorger 1 die Notwendigkeit, Verkaufstellen und Infrastrukturen für die Herausgabe und den Vertrieb der Karte 2 zur Verfügung zu stellen. Für gewöhnlich wird zwischen Versorger und Herausgeber ein Vertragsverhältnis zur internen Abrechnung geschlossen werden, dargestellt durch den Pfeil 101. Der Entnehmer 4 kauft die Karte 2 nun nicht direkt beim Versorger 1, sondern beim Herausgeber 100, dargestellt durch den Pfeil 12. Die Rückmeldung kann nun sowohl alternativ als auch kumulierend an den Herausgeber 100 erfolgen, dargestellt durch den Pfeil 113, als auch direkt an den Versorger 1, dargestellt durch den Pfeil 13. Erfolgt die Rückmeldung 113 an den Herausgeber 100, so wird dieser Kontakt zum Versorger 1 aufnehmen, damit dieser die erworbene Menge an Wasser 30 zur Verfügung stellt. Der Entnehmer 4 entnimmt nach der Freischaltung durch den Versorger 1 die von ihm bezahlte Menge an Wasser 30, dargestellt durch den Pfeil 14, während der Versorger 1 dann vom Herausgeber 100 den entsprechenden Geldbetrag abzüglich dessen Vertriebshonorar einfordern kann.

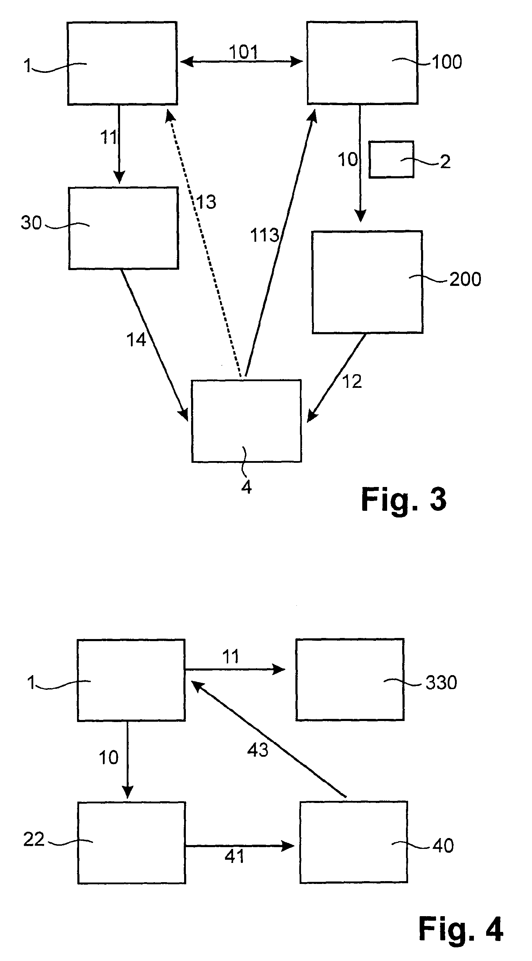

Fig. 3 zeigt noch ein weiteres Ausführungsbeispiel der Erfindung, bei dem zusätzlich zum Versorger 1, dem Entnehmer 4 und dem Herausgeber 100 ein Dritter 200 hinzukommt, der für den Vertrieb, der vom Herausgeber 100 herausgegebenen Karte 2 zuständig ist. Mit anderen Worten, der Herausgeber 100 gibt eine Karte 2 heraus, dargestellt durch den Pfeil 10 und liefert sie an einen Dritten 200, z.B. einen Kioskbetreiber. Der Dritte 200 verkauft die Karte 2 an den Entnehmer 4, dargestellt durch den Pfeil 12. Als Dritter kommen sämtliche Verkaufsstrukturen in Frage, beispielsweise Handelsgeschäfte, Tankstellen, Kioske, Gaststätten, Vertrieb über das Internet oder Bestellhandel. Wie aus Fig. 3 ersichtlich ist der Dritte 200 lediglich für den Verkauf der Karte 2 zuständig. Der Entnehmer 4 führt dann eine Rückmeldung durch, die sowohl an den Herausgeber 100, dargestellt durch den Pfeil 113, als auch direkt an den Versorger 1, dargestellt durch den Pfeil 13, erfolgen kann. Der Versorger 1 stellt die gekaufte Versorgungsleistung, im Ausführungsbeispiel der Fig. 3 Wärme 300 bereit, die der Entnehmer 4 entnimmt, dargestellt durch den Pfeil 14. Durch diesen separaten Dritten 200, der die vom Herausgeber 100 herausgegebene Karte 2 vertreibt, wird das erfindungsgemäße System weiter vereinfacht. Es werden bereits beim Dritten 200 vorhandene Vertriebsstrukturen genutzt, so dass weder der Herausgeber 100 noch der Versorger 1 eigene Infrastrukturen bereitstellen bzw. aufbauen müssen.

Fig. 4 zeigt ein Ausführungsbeispiel einer Rückmeldung in schematischer Darstellung. Der Versorger 1 gibt eine Karte 22 heraus, dargestellt durch den Pfeil 10. Es sei jedoch angemerkt, dass die Herausgabe der Karte 22, wie in den vorangegangenen Ausführungsbeispielen auch, ebenfalls durch einen Herausgeber 100 erfolgen kann. Diese Karte ist in eine Aufnahme 40 an der Entnahmestelle einführbar, dargestellt durch den Pfeil 41. Die Karte 22 ist eine Karte mit einem Datenspeicher, insbesondere einem Speicherchip, auf dem die Daten zur Rückmeldung und über die vom Entnehmer erworbene bestimmte Menge an Versorgungsleistung gespeichert ist. Durch das Einführen in die Aufnahme 40 wird direkter Kontakt mit dem Versorger 1 aufgenommen und eine Rückmeldung 43 durchgeführt. Diese Rückmeldung kann beispielsweise bei Abgabe von Strom als Versorgungsleistung direkt über die Stromleitung (sog. Powerline) erfolgen. Weiterhin kann die Rückmeldung 43 auch beispielsweise über Funk erfolgen. Nach erfolgreicher Rückmeldung stellt der Versorger 1 dann die gewünschte Versorgungsleistungim Ausführungsbeispiel der Fig. 4 beispielsweise eine gewisse Menge an Erdgas 330 bereit, dargestellt durch den Pfeil 11. Im Ausführungsbeispiel der Fig. 4 wird die Rückmeldung folglich automatisch nach Einführen der Karte 22 in die Aufnahme 40 durchgeführt. Anders als in den Ausführungsbeispielen der Fig. 1 - 3 erfolgt die Rückmeldung folglich nicht unmittelbar durch den Entnehmer selber, sondern lediglich indirekt durch den Entnehmer, da dieser die Karte 22 nur noch in die Aufnahme 40 einführen muss.

## Patentansprüche

1. Verfahren zur Bereitstellung einer Versorgungsleistung (3, 30, 300, 330)bestehend aus:
a) Herausgabe (10) eines Mittels (2, 22) als Nachweis, dass eine bestimmte Menge an Versorgungsleistung erworben wurde, wobei mit Hilfe des Mittels (2, 22) eine Rückmeldung (13, 43, 113) an den Herausgeber (100) des Mittels und/oder einen Versorger (1), der die Versorgungsleistung bereitstellt, erfolgt;
b) Freischalten der Versorgungsleistung, wenn die Rückmeldung erfolgt ist; und
c) Abschalten der Versorgungsleistung, wenn die bestimmte Menge verbraucht ist.

2. Verfahren nach Anspruch 1, wobei die Versorgungsleistung Strom (3), Wasser (30), Gas (330), Wärme (300) oder ähnliche Medien umfasst.

3. Verfahren nach Anspruch 1 oder 2, bei dem die Rückmeldung dadurch erfolgt, dass das Mittel (2, 22) nach Einbringen in eine entsprechende Aufnahme (40) an einem Entnahmeort selbsttätig Kontakt mit dem Herausgeber und/oder Versorger aufnimmt und Daten für die Rückmeldung übermittelt.

4. Verfahren nach Anspruch 3, wobei die Datenübermittlung über Telefon, die Stromleitung und/oder Funk erfolgt.

5. Verfahren nach Anspruch 3, wobei das Mittel eine Karte (22), insbesondere mit einem Speicherchip, ist, auf der Daten zur Rückmeldung (43) und über die bestimmte Menge an Versorgungsleistung gespeichert sind.

6. Verfahren nach Anspruch 1 oder 2, wobei die Rückmeldung (13, 113) durch einen Entnehmer (4) selbst erfolgt, der die Versorgungsleistung am Entnahmeort entnimmt.

7. Verfahren nach Anspruch 6, wobei die Rückmeldung mittels Telekommunikationsdienstleistungen, insbesondere mittels insbesondere mittels Telefon, E-mail oder SMS erfolgt.

8. Verfahren nach Anspruch 6, wobei die Rückmeldung schriftlich erfolgt, insbesondere mittels Postdiensten.

9. Verfahren nach einem der Ansprüche 1 - 8, wobei als Mittel eine Karte mit einem aufgedruckten Identifikationsmerkmal, insbesondere einer Nummer- oder Buchstabenfolge, verwendet wird, das nach Freilegen, vorzugsweise durch Freirubbeln, an den Herausgeber und/oder Versorger zurückgemeldet wird.

10. System zur Bereitstellung einer Versorgungsleistung (3, 30, 300, 330), mit dem die Versorgungsleistung nur dann und in einer Menge bereitgestellt wird, wenn diese vor ihrer Entnahme (14) bezahlt oder kreditiert worden ist, umfassend:
a) einen Versorger (1), der die Versorgungsleistung bereitstellt;
b) ein Mittel (2, 22) als Nachweis, dass eine bestimmte Menge an Versorgungsleistung erworben wurde; und
c) eine Entnahmestelle, an der die Versorgungsleistung entnehmbar ist,
wobei mit Hilfe des Mittels (2, 22) eine Rückmeldung (13, 43, 113) an einen Herausgeber (100) des Mittels und/oder den Versorger (1) erfolgt, und aufgrund der Rückmeldung die vorherbestimmte Menge an Versorgungsleistung bereitgestellt wird.

11. System nach Anspruch 10, wobei an der Entnahmestelle ein Mittel-Lesegerät mit einer Aufnahme (40), in die das Mittel (22) einführbar ist, vorgesehen ist, das mittels auf dem Mittel (22) vorhandenen, insbesondere elektronisch gespeicherten Daten die Rückmeldung (43) durchführt.

12. System nach Anspruch 10, wobei ein Entnehmer (4) die Rückmeldung (13, 113) mit Hilfe von auf dem Mittel (2) vorhandenen Daten selbst durchführt.

13. System nach einem der Ansprüche 10 - 12, wobei das Mittel (2) vom Versorger (1) selbst herausgegeben (10) wird.

14. System nach einem der Ansprüche 10 - 12, wobei das Mittel (2) von einem Herausgeber (100) herausgegeben (10) wird.

15. System nach einem der Ansprüche 10 - 14, wobei das Mittel eine Karte (2, 22) ist, insbesondere eine Karte mit einem Datenchip und/oder einem Identifikationsmerkmal, insbesondere einer freirubbelbaren Nummern- oder Buchstabenfolge.

16. System nach einem der Ansprüche 10 - 15, wobei das Mittel über Dritte (200) vertreibbar ist.
